# EUROPEAN PATENT APPLICATION

(11) **EP 0 834 259 A1**
(43) Date of publication of application: **08.04.1998**
(21) Application number: 97307210.1
(22) Date of filing: 17.09.1997
(51) Int. Cl.: A23K 3/03

(54) **Silage**

(30) Priority: 17.09.1996 GB 9619337
(71) Applicant: Ecosyl Products Limited, Billingham, Cleveland TS23 1YA (GB)
(72) Inventor: Moran, Joseph Patrick, Darlington, Co. Durham DL3 7SX (GB)
(74) Representative: Brierley, Anthony Paul

(57) **Abstract**

A composition for use in making silage comprises a silage promoter, which may be a micro-organism, and a hydrotrope which may be a water soluble polymer.

## Description

This invention relates to silage and particularly, although not exclusively, relates to a process and composition for use in making silage.

Silage is commonly made by applying to a crop while still in the field an aqueous silage-promoting composition. This requires transport of the composition about the field and, consequently, it is desirable to limit the volume of material that needs to be transported. The Applicant has found that a given volume of a silage-promoting composition will cover a greater crop area if the composition contains a hydrotrope as hereinafter referred to. The composition also appears to have advantages in other silage-making techniques.

According to a first aspect of the invention a process of making silage is characterised by contacting ensilable vegetable matter with a composition, especially an aqueous composition, comprising at least one silage promoter and at least one hydrotrope.

By 'hydrotrope' is meant a compound effective to change the consistency of an aqueous liquid so as to promote flow and/or dispersion into small droplets, and/or wetting of and/or spreading on, solid surfaces, in particular the surface of vegetable matter. Particular types of hydrotropy believed to be important for the invention include lowered surface tension (as when using conventional amphipathic compounds), presence of ions and the spreading effect of water-soluble polymers.

The process appears to be especially advantageous when the silage promoter is a microorganism. Among the usable microorganisms are lactic acid formers, for example Enterococcus, Leuconostoc, Pediococcus, Serratia and Streptococcus, and especially Lactobacillus, for example L.plantarum, such as NCIMB 40027, deposited at the National Collection of Industrial and Marine Bacteria, 23 St Machar Drive, Aberdeen AB2 1RY, United Kingdom. Specific other examples of Lactobacillus are L.acidophilus, L.amylophilus, L.bifidus, L.brevis, L.bulgaricus, L.casei, L.curvatus, L.coryneformis, L.delbrueckii, L.fermetii, L.helveticus, L.lactis, L.thermophilus. Specific examples of Leuconostoc are Leu.cremoris, Leu.dextranicum and Leu.mesenteroides. Specific examples of Pediococcus are P.acidilacti, P.cerevisiae, P.pentosaceus. A specific example of Serratia is S.rubidaea. Specific examples of Streptococcus are S.cremoris, S.diacetylactis, S.faecalis, S.faecium, S.lactis and S.thermophilus.

In addition to the silage promoter there may be present one or more auxiliaries, selected from, for example:
anti-fungals, especially anti-fungal bacteria such as Bacillus subtilis (e g FB 260; NCIMB 40286) or Serratia, especially S.liquifaciens, S. plymuthica or S.rubidaea (eg FB 299; NCIMB 40285). Such anti-fungals may be as described in our co-pending application EP-A-0408220. Others include B. pumilus;
nutrients such as sugars;
bacterial growth factors such as yeast extract, corn steep
   liquor or vitamins;
inorganic growth factors such as phosphate buffers;
   and
enzymes such as cellulases or hemicellulases.

Unless otherwise stated in this specification, an alkyl group may have up to 20, suitably up to 10, preferably up to 8, more preferably up to 6, especially up to 4 carbon atoms with methyl and ethyl groups being preferred.

Unless otherwise stated, where any group is stated to be "optionally-substituted" in this specification, it may be substituted by one ore more: halogen atoms, especially fluorine, chlorine or bromine atoms; or optionally substituted acyl, nitro, cyano, alkoxy, hydroxy, amino, alkylamino, sulphinyl, alkylsulphinyl, sulphonyl, alkylsulphonyl, sulphonate, amido, alkylamido, alkylcarbonyl, alkoxycarbonyl, halocarbonyl, haloalkyl, alkyl, alkenyl or alkynyl groups.

The hydrotrope is suitably a water-soluble polymer. Preferably such polymer contains amide groups and/or ionisable groups, especially carboxy groups. Such ionisable groups are of course ionised to an extent dependent on the pH of the aqueous composition.

Preferably, said hydrotrope is a polymer, for example an acrylic addition polymer, containing repeating groups of formula

-CH₂-C(R¹) (COOR²)- I

wherein R¹ represents a hydrogen atom or an optionally-substituted, especially an unsubstituted, alkyl or phenyl group and R² represents a hydrogen atom or an optionally-substituted, especially an unsubstituted, alkyl or amine group or a cationic group (in which case the moiety -COO- of the moiety -COOR²- may represent a moiety -COO⁻-) for example Na⁺ or K⁺, especially Na⁺.

R¹ may represent a hydrogen atom or a C₁₋₈ alkyl group. Preferably, R¹ represents a hydrogen atom or a methyl group, but especially represents a hydrogen atom. Preferably, R² represents a hydrogen atom.

The polymer preferably contains at least 50 mol% of groups of formula I. There may be side-chain polyethyleneoxide groups. Other polymers may contain maleic acid units. Grades of polymers intended for use as anti-scalants appear to be especially effective.

The molecular weight of the hydrotrope should be low enough to give a mobile composition. The molecular weight of the hydrotrope is typically in the range 1000 - 25,000. The molecular weight is preferably less than 20,000, more preferably less than 15,000, especially less than 12,000.

The hydrotrope is suitably present in said composition at a concentration below the level at which chain entanglement gives rise to a significant increase in viscosity.

The hydrotrope may be a non-polymeric surfactant. Surfactants containing anionic and/or non-ionic, but not cationic, hydrophilic groups are preferred.

When the silage promoter is a microorganism, the hydrotrope should be non-toxic to the microorganism or it should be used at a concentration low enough to avoid toxicity.

When the silage promoter is a microorganism, the composition may contain at least one of an ascorbate (as hereinafter defined) at e.g. a mass fraction of at least 0.05, an alpha amino carboxylate also at e.g. a mass fraction of at least 0.05 and a water-soluble carbohydrate at a mass fraction of e.g. at least 0.2, such as sugar and/or sugar alcohol, for example sucrose, maltose or non-fat skimmed milk powder; or mannitol or inositol. Such components may be introduced separately or in combination when making the composition but more conveniently by dissolving in water a solid pre-mix containing them. Very suitably such a premix is a dry stabilised culture, suitably containing ascorbate and glutamate or aspartate, more especially comprising all three of the above-mentioned components, for example as described in WO91/11509. Other possible components of the stabilised culture include buffers (eg calcium carbonate or hydroxide) and viscosity inducers (eg sodium alginate, carboxymethyl cellulose, gellan gum or gum arabic). Whereas such preferred cultures are stable enough for storage at ambient temperature or up to about 37°C, the composition can be made from cultures requiring refrigerated storage.

By 'an ascorbate' is meant the anion and/or undissociated acid (depending on the pH of the system in question) of one or more of the acids L-ascorbic (vitamin C), 6-deoxy-L-ascorbic, L-rhamnoascorbic and D-araboascorbic.

If desired, a solids pre-mix may contain the hydrotrope, but it is more convenient to introduce it for the first time when preparing the aqueous composition to be applied. Conveniently the composition is made by diluting the solids pre-mix with 0.5 to 10 times its weight of water to give a mobile suspension, providing the hydrotrope as a mobile liquid and dispersing both in water to give the composition at application strength. Typical bacterial counts of the solid pre-mix and composition are indicated below. The pH of the composition is typically to be in the range 4-9.

We have observed that the microorganism count of the composition may increase after preparation of the sprayable composition. Accordingly a preferred form of the process includes the steps of (a) assembling the composition with at least part of its application water and (b) holding the assembled composition at a temperature at which cell multiplication takes place. If the composition is not capable of such cell multiplication, it is usually stable for at least some hours, and as a result urgency in spraying after mixing is unnecessary.

The dried culture typically contains 10⁹-10¹² colony forming units per g. The aqueous composition typically contains at least 2 and preferably 5-15 x 10⁸ colony forming units per ml.

The concentration of hydrotrope in the composition may be at least 0.01, preferably at least 0.02, especially at least 0.04 g/l. The concentration may be less than 10 g/l, preferably less than 7 g/l, more preferably less than 4 g/l. Where the hydrotrope is a water-soluble polymer, the concentration may be in the range 0.5 to 5.0 g/l, especially 1 to 3 g/l. Where it is a non-polymeric surfactant, it may be in the range 0.02 to 0.15 g/l, especially 0.04 to 0.1 g/l.

The ensilable vegetable matter may be for example cereal grains (especially high-moisture corn grains), maize, whole cereal crops, grasses, legumes (e g clover, peas, beans, lucerne), rice or sorghum.

The composition may be applied to vegetable matter in the field, usually after cutting and possibly after wilting and some drying. It may be applied to such matter during passage through a forage harvester. The treated matter may then be matured and stored in a sealed silo or clamp, possibly with compression, possibly with evacuation. The composition may be applied as the material is fed to the clamp or silo.

In silage-making a liquid suspension or powder may be applied at concentrations in the range 1 to 1000 x 10⁵, especially 1 to 50 x 10⁵, colony-forming units per g of forage.

Advantageously, in the process, a composition may be applied at a rate of less than 2.51/tonne of ensilable matter (e.g. grass), preferably less than 2.01/tonne, more preferably about 1.51/tonne or less. Such an application rate may apply 1 to 1000 x 10⁵, preferably 1 to 50 x 10⁵, more preferably about 1 x 10⁶ colony forming units per g of matter.

The invention extends to the use of a hydrotrope for making silage.

According to a second aspect, there is provided a combination, which may be in kit form, for use in a process of making silage, the combination comprising at least one silage promoter and at least one hydrotrope.

Said promoter and hydrotrope may be mixed together or may be separate for example by being provided in different containers.

Said silage promoter may be provided in an aqueous composition. Said hydrotrope may be provided in an aqueous composition.

The invention extends to a process for making a composition according to the first aspect which comprises diluting said combination of said second aspect.

The invention further extends to silage comprising vegetable matter, a silage promoter and a hydrotrope.

Any feature of any aspect of any invention or example described herein may be combined with any feature of any other aspect of any invention or example described herein.

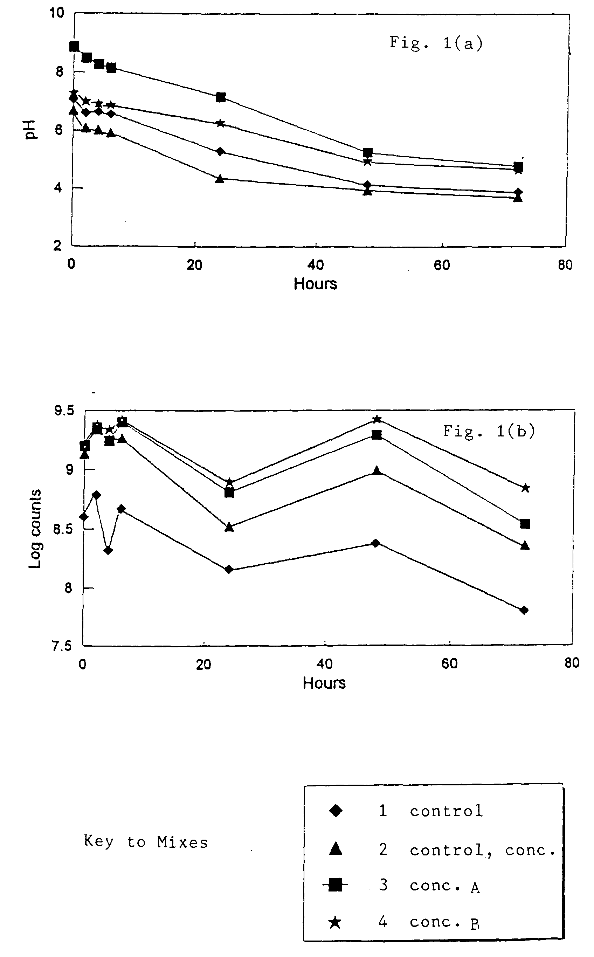

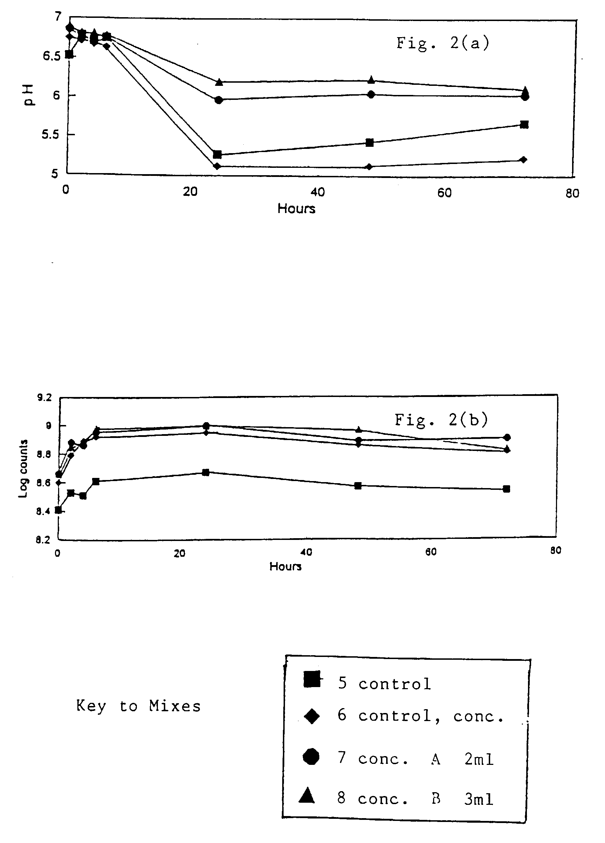

The invention will now be described, by way of example, with reference to figures 1(a), (b) and 2(a), (b) which show the results of Examples 1 and 2 respectively.

### EXAMPLE 1

The starting material was a freeze-dried stabilised culture made as described in WO-A-91/11509 and consisting of the following:

| Lactobacillus plantarum NCIMB 40027 | |
|---|---|
| (22% w/w active organisms) | 100 |
| Sodium erythorbate | 12 |
| Glycine | 12 |
| Sucrose | 25 |

For each sample tested, an aliquot (see Table 1) of this material was shaken in a bottle with 1 litre of water, then poured with stirring into a larger volume of water, to give a 'tank mix' having the bacterial counts specified below. The hydrotrope component A and B was available as aqueous solution and was stirred into the otherwise complete tank mix.

Table 1 shows the compositions of the mixes tested.

**TABLE 1 -**

| **TANK MIX COMPOSITIONS** | | | | |
|---|---|---|---|---|
| **Mix No** | **1** | **2** | **3** | **4** |
| Aliquot g | 1.32 | 3.97 | 3.97 | 3.97 |
| Counts per ml x 10⁻⁸ of tank mix (intended) | 3 | 10 | 10 | 3 |
| Component A* ml l⁻¹ of tank mix | 0 | 0 | 3.0 | 0 |
| Component B* ml l⁻¹ of tank mix | 0 | 0 | 0 | 3.0 |

| | | | | |
|---|---|---|---|---|
| * denotes grade of sodium polyacrylate anti-scalant: molecular weights Component A = 10000; Component B = 1500. Each sample (2 replicates) was tested thus: 1 held at 24°C for 72 hours, pH measured at intervals; 2 held at 24°C for 72 hours, bacteria counted at intervals. | | | | |

Results (average) are shown in fig 1(a) and 1(b) of the accompanying drawings. It is evident from fig. 1(a) that the mixes containing the polyacrylate are at least as stable in pH as the controls, that is, they do not generate lactic acid before it is required. From fig.1(b) it is evident that the mixes containing polyacrylate show a usefully higher bacterial count than the controls.

### EXAMPLE 2: Compositions Containing Phosphate.

The dry culture used in Example 1 contained, per 3.3 x 18¹¹ freeze-dried cells, also potassium dihydrogen phosphate (0.92g) and potassium hydrogen phosphate (0.53g), sodium silicoaluminate (0.1g) and yeast autolysate (0.25g). The mixes used are shown in Table 2.

**TABLE 2 -**

| **TANK MIX COMPOSITIONS CONTAINING PHOSPHATE** | | | | |
|---|---|---|---|---|
| **Mix No** | **5** | **6** | **7** | **8** |
| Aliquot, g | 1.32 | 2.64 | 2.64 | 2.64 |
| Counts per ml x 10⁻⁸ of tank mix (intended) | 3 | 6,6 | 6.6 | 6.6 |
| Component B* | 0 | 0 | 2.0 | 3.0 |

| | | | | |
|---|---|---|---|---|
| * see note to Table 1 Each sample (3 replicates) was tested as described in Example 1 and also: 3 a sub-sample sprinkled in onto "PARAFILM"-coated glass plates. The volume applied per unit area was about equal for all the mixes and was insufficient to give complete coverage. | | | | |

Visual examination of the 'PARAFILM' (RTM)-coated plates showed that mixes 7 and 8 gave a more complete coverage than mixes 5 and 6. The deposited droplets from mixes 7 and 8 were of diameter in the range 0.005 to 0.02 mm, that is, about half the diameter (0.01-0.04 mm) of those from mixes 5 and 6.

Results (average) are shown in figs 2(a) and 2(b) of the accompanying drawings. Note that the ordinate scale and the shapes indicating points on the curves are not the same as in figs 1(a) and 1(b). It is evident from fig. 2(a) that the mixes containing the polyacrylate are at least as stable in pH as the controls, that is, they do not generate lactic acid before it is required. From fig.2(b) it is evident that the mixes containing polyacrylate show a usefully higher bacterial count than the controls.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A process of making silage, characterised by contacting ensilable matter with a composition comprising at least one silage promoter and at least one hydrotrope.

2. A process according to Claim 1, wherein said hydrotrope is a water-soluble polymer.

3. A process according to Claim 1 or Claim 2, wherein said hydrotrope contains a repeating group of formula
-CH₂-C(R¹) (COOR²)-
wherein R¹ represents a hydrogen atom or an optionally substituted alkyl or phenyl group and R² represents a hydrogen atom or an optionally substituted alkyl or amine group or a cationic group.

4. A process according to any preceding claim, wherein the molecular weight of the hydrotrope is in the range 1,000 to 25,000.

5. A process according to any preceding claim, wherein the concentration of hydrotrope in the composition is at least 0.01g/l and less than 10g/l.

6. A process according to any preceding claim, wherein said composition is applied at a rate of less than 2.5l/tonne of ensilable matter.

7. Use of a hydrotrope for making silage.

8. A combination for use in a process of making silage, the combination comprising at least one silage promoter and at least one hydrotrope.

9. A combination according to Claim 8, wherein said promoter and hydrotrope are either mixed together or separate from one another.

10. A process for making a composition and described in any of Claims 1 to 6 which comprises diluting the combination of Claim 8 or Claim 9.

11. Silage comprising ensilable matter, a silage promoter and a hydrotrope.
